# EUROPEAN PATENT APPLICATION

(11) **EP 1 201 547 A1**
(43) Date of publication of application: **02.05.2002**
(21) Application number: 00900137.1
(22) Date of filing: 07.01.2000
(51) Int. Cl.: B65B 51/10, H05B 3/12

(54) **HEATER WIRE FOR DEVICE SUCH AS IMPULSE HEAT SEALER**

(30) Priority: 09.06.1999 JP 19941099
(71) Applicant: Sakamoto, Atsunobo, Inba-gun, Chiba 270-1423 (JP); Sakamoto, Kazuko, Inba-gun, Chiba 270-1423 (JP)
(72) Inventor: Sakamoto, Atsunobo, Inba-gun, Chiba 270-1423 (JP); Sakamoto, Kazuko, Inba-gun, Chiba 270-1423 (JP)
(74) Representative: Hackney, Nigel John
(86) International application number: JP0000035
(87) International publication number: WO0075018

(57) **Abstract**

A heater wire which is applied to an impulse heat sealer, a bookbinding machine, a laminator, an image-creating device, and so on. A thin sheet of resistant material such as an iron-chromium alloy is further thinned by rolling, properly strengthened by quenching, and processed by photoetching so that the width of a heat-generating part is small and those of the electrodes are larger than that, thus integrally producing a heater wire. The heat-generating part of the heater wire is zigzag at such small intervals that the zigzag pattern disappears on a sealing line or plane because of heat diffusion, and the width of the zigzag is uniformly narrow and almost equal to that of the required shape. Therefore, the drawback on connection between the heat-generating part and electrodes is solved and the resistant wire is matched with the power supply voltage because of its relatively fine and long structure.

## Description

### Technical Field

The present invention relates to an impulse sealer, a book binding machine and a laminator which thermally melt and adhere such as polyethylene.

### Background Art

An impulse heat sealer is caused to flow a current of 8-15A through a heater wire having a width of about 2 ∼ 5mm, heats to about 150°C for a short period of about one second and melts and adheres polyethylene and thermally meltable resin, and with regard to the heater wire a heat generating portion therefor uses a narrow width wire member having a high electrical resistance such as iron chromium and nichrome, and an electrode portion which requires no heat generation uses such as a comparatively thick plated copper plate and iron plate, and the both are connected such as by press contacting and spot welding.

Although a large current flows through the sealer, since the length of the sealer is about 20 ∼ 40 cm, a voltage whicch appears at the both ends thereof merely reaches to about 15 ∼ 30V. For this reason, the commercial power source voltage of 100 ∼ 220V had to be adjusted by making use of a voltage regulator such as a transformer and an electronic circuit.

Since such as the press contacting and the spot welding of the heater wires is a manual work which requires senses, and causes irregular length thereof, defective products and lack of accuracy, and which tends to cause overheating of the connected portion and shortening the lifetime thereof.

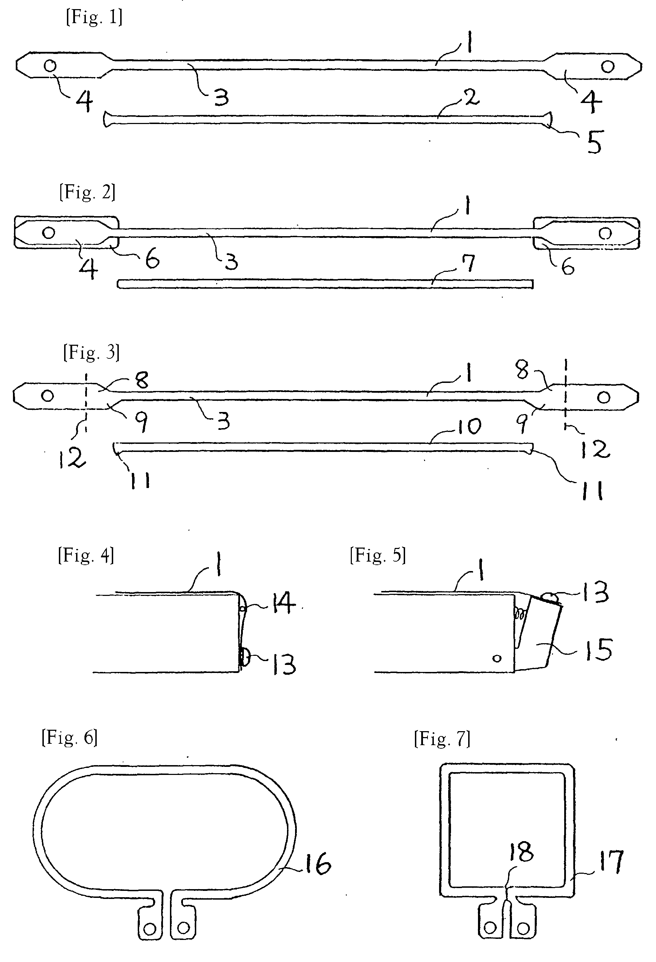

Further, the electrode such as press contacted and spot welded has a substantial thickness, the thick electrode portion could not be mounted on a heater stand, therefore, when a conventional expansion absorbing device 15 as shown in Fig. 5 is used and the heat generation portion is extended, the both ends thereof float in air and are overheated, therefore, it is frequently happened that holes are caused in such as polyethylene over the over heated portions.

Further, the transformer is very heavy, and with regard to the voltage regulator in the form of the electronic circuit since the voltage thereof is comparatively low in comparison with the power source voltage and the current thereof is large, the control thereof is difficult and fault likely occurs, and further the prices of these two components were high.

In such as the bookbinding machine and the laminator such as metallic bar and a roll having a large thermal capacity are heated by a heater which is formed by winding a nichrome wire around such as a mica plate and are used under a thermal equilibrium state thereof. Therefore, even if the amount for a processing is slight, it is required to wait for from 5 to 10 minutes until the metallic bar or the roll are heated.

As a prior art of the present invention, JP(U)-A-57-167004 (herein below will be referred to as citation) is located. The citation discloses a zigzag shaped heater wire which is formed by cutting slits on a tape shaped metallic layer pasted on a glass epoxy resin substrate from both sides thereof alternatively in perpendicular direction to its longitudinal direction, and of which configuration is very similar to the present invention. However, the objects of the citation are to prevent braking of the heater wire due to force of a thermal expansion use spring, to eliminate a transformer by narrowing a broad width heater wire and to enhance heat dissipation property, and is silent to eliminate the zigzag shape on a seal line by decreasing a gap of the respective slits and never refers to such object.

With regard to the gap size, the citation indicates that the gap size is about three times larger than the thickness of the metallic layer. Since the thickness thereof in an embodiment of the citation is 0.1mm, the gap will be 0.3mm. Although an iron chrome thin plate with no tempering having thickness of 0.1mm cannot maintain of its given shape. However, since the heater wire according to the present invention the shape can be maintained without trouble, an experiment was performed thereon in such a manner while covering a teflon coated glass tape of 0.1mm over the thus produced heater wire, the heater wire was heat sealed according to the embodiment, however, gaps clearly appeared on a seal line. If a metallic wire with no tempering is used, thickness of 0.2mm is required, then according to the citation the gap will amount to 0.6mm in such instance the gaps will further clearly appear on the seal line.

Therefore, the disclosure in the citation "the seal width is 5mm corresponding to the width of rectangular pulse wave as shown in Fig. 1" likely possibly suggests that the seal line is in a zigzag shape as it is, however, if the gaps on the seal line disappear, it is presumed that such will be caused by the heat accumulated therearound including a substrate, because the citation indicates that the sealing time is 4 seconds which is 4 ∼ 8 times longer than a sealing time of 0.5 - 1 second of a usual sealer, on one hand it is presumed that such is because of a poor heat dissipation which is contrary to the original object of the citation, anyway the citation nowhere suggests that the gaps should be limited as much as possible.

Further, in the citation, it is necessary to keep the shape of the metallic plate by adhering the same on a glass epoxy resin substrate, however, in order to reduce cost in mass production with regard to metallic portions photo exposure and etching is performed over a broad area, therefore, the citation raises a lot of problems and includes unsolved problems as follows. How the glass epoxy resin substrate is cut? Whether the heat resisting property of the epoxy resin substrate can be maintained because the operation temperature of the sealer for such as PP rises to more than 150°C. What sort of adhesives having durability is used? Whether the heat dissipation property due to the closely contacted substrate is deteriorated as referred to above? Whether the sealing time is prolonged because of the heat absorption by the substrate? How the both ends of the lead wire portion can be taken out to the outside in a flat state because the both ends of the lead wire portion also serve as the pressing faces.

### Disclosure of the Invention

A heater wire is formed in such a manner that a thin plate of resistance material such as iron chromium is further thinned extremely by means of such as rolling and is properly strengthened such as by tempering, thereafter the same is processed such as by photo etching, then the width of electrode portion a portion which is required to suppress heat generation is broadened so far as permitted, a heat generating portion is shaped into a desired configuration with a narrow uniform width, then the both portions are integrated.

Further, a measure is applied to the electrode portion which eliminates a drawback of swelling a seal line.

Further, the heater wire is formed in a zigzag shape of narrow uniform width over the entire desired configuration of the heat generation portion while using small gaps which disappear due to heat diffusion from the formed seal line or plane.

Still further, by making use of the heater wire impulse type bookbinding machine and laminator are produced in which heating is performed instantaneously to melt an adhesive on an inside resin and then interrupts the current supply to cool the same.

### Brief Description of the Drawings

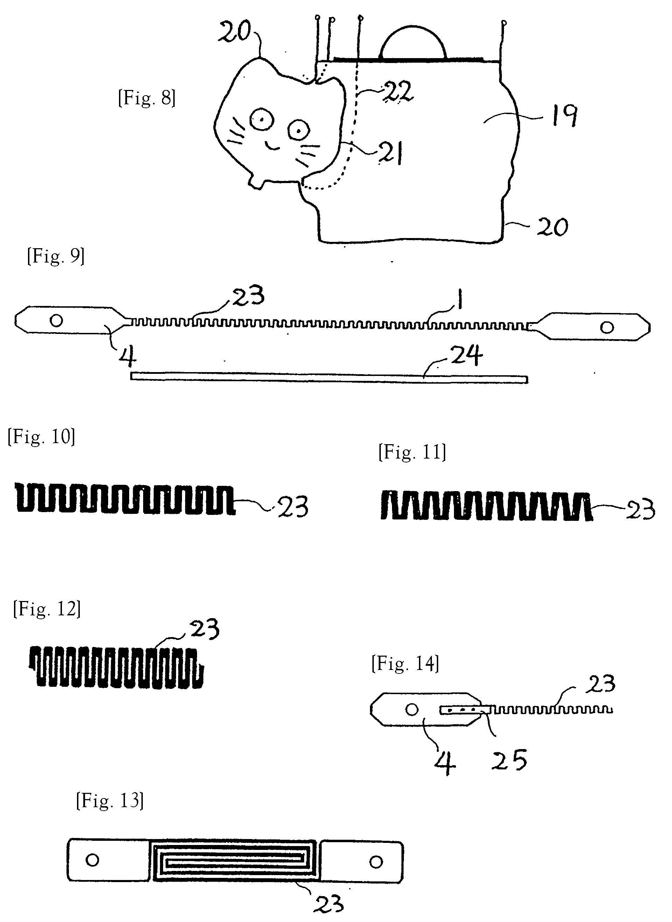

Figs. 1 through 3 are plane views of a variety of heater wires of the present invention and of a variety of seal lines in that the formed melting and adhering traces through sealing, Fig. 4 is a side view showing an expansion absorbing structure of a heater wire caused by itself, Fig. 5 is a side view of a conventional expansion absorbing structure, Figs. 6 and 7 are plane views showing application examples of the heater wire of the present invention and Fig. 8 is a plane view showing heater wires for a bag with a cat pattern.

Fig. 9 is a plane view showing a zigzag shaped heater wire and the seal line formed thereby, Figs. 10 through 12 are enlarged plane views of heat generating portions thereof, Fig. 13 is a plane view showing another heater wire and Fig. 14 is a plane view showing a connecting portion with a heater wire.

### Best Modes for Carrying Out the Invention

Fig. 1 is a plane view of a heater wire 1 and its seal line 2 in an example of the present invention. The heater wire 1 includes a heat generating portion 3 having width of 2mm and electrode portions 4 having width of 5mm which are formed from a same plate member by photo etching in such a manner that on a thin plate which is formed by rolling an iron chromium material into 0.1mm and is adjusted into a proper hardness a photosensitive material is coated in advance, after photo-masking a pattern the coated photosensitive material is exposed and fixed, thereafter, further covering a necessary portion with a film and dissolving and removing unnecessary portions by acid to complete the same. As in the present electrode portions even if a same resistance material is used, when the width of the electrode portions is broadened more than about two times, it can be controlled no sealing is effected at the portions.

When the heater is used for household use in which number of its use is small, no problems occur, however, the heater is used continuously in a certain extent the heat in the heat generating portion gradually spreads into the electrode portions 4, swellings 5 are formed in the seal line 2 of the heater wire 1 due to width expansion of the electrode portions 4 at both ends thereof. If a force applied to a bag is concentrated on to the swelling 5, the seal is likely broken. There are three countermeasures therefor.

The first countermeasure is to place a heat absorbing electrode plates 6 at the positions of the electrode portions 4 so as to overlap therewith as shown in Fig. 2, thereby, the heating is stopped at their overlapping portions as shown by the seal line 7, the heat absorbing electrode plate 6 which is disclosed in Japanese Patent Application No. Heisei 8-346654 is a thin plate of such as nickel plated phosphor bronze and alloy materials having good electrical and, in particular, thermal conductive property can be used therefor. Drawbacks of this measure are to increase number of parts correspondingly and, because of current flow between the heat generating portions 3 and the heat absorbing electrode plates 6, to consume the heater wire comparatively rapidly at their contacting portions.

A second countermeasure is, in order to prevent swelling of the seal line at the side of the bag main body, either to offset the heat generating portion 3 from the center, to eliminate the width broadened portion 8 at the side of the bag main body and to double the width at the opposite side or as shown in Fig. 3 to retreat the width broadened portions near to the both ends as illustrated in comparison with the width broadened portion 9 at the opposite side, which forms the side of the bag edges. In this instance, although the swelling 11 on the seal line is formed which only appears at the side of the bag edges. The above indication of at the sides of the bag main body and of at the bag edges is, of course, only one of standards which implies that the swellings are aligned at one wide where the adversary influence is small.

The same effect can be obtained if the heater wire 1 is bent perpendicularly along the broken lines 12 in Fig. 3. This is for preventing unnecessary elongation of the sealer. When the electrode portion 4 is bent perpendicularly as illustrated by the side view in Fig. 4, a pillow shaped projection 14 is placed before the fixing screw 13 to apply a tension thereto, the elongation of the heat generating portion caused during the heating is sufficiently absorbed by the electrode portion through the spring property of itself, thereby, the conventional complex elongation absorbing device 15 having many parts is unnecessitated.

The heat generating portion 3 can be formed in any shapes other than the straight line. An elliptical heater wire 16 as shown in Fig. 6 is for a molding handle of a polyethylene shopping bag and a rectangular heater wire 17 as shown in Fig. 7 is for sealing an outer frame of a bag shaped filter. Further, the heater wire 17 is required to form a closed space by the rectangular seal line, therefore, if the gap at a nearby portion 18 is set below 0.2mm, the gap on the seal line will disappear.

Such relationship between gap and seal line occurs in any heater wires. Fig. 8 shows heaters for a shopping bag with an inflatable cat head which is used through experience for balloon manufacturing method disclosed in U.S. Patent No. 5,545,117, wherein a heater wire 20 of nichrome round wire is for sealing and burning off the outer configuration, likely, a heater wire 21 is for simply sealing in order to separate the cat head from the inside of the shopping bag and copper wires are connected along dotted portions 22 at both ends thereof so as to prevent heat generation. The heater is formed in such a manner that after arranging these round wires into a desired configuration, these are caught by such as a fluoro resin coated glass cloth with adhesive to fix the same. The cat face and the handle are illustrated to facilitate understanding of the above explanation.

At this instance, at the portions where the two heater wires come most close, in that at two portions at root portion of ear and jaw portion, it is necessary to keep air tight, therefore, the heater wire 21 is closely contacted at the portions by adhering such as a glass tape having thickness of about 0.1mm but electrically insulating from the other. Because of adhering the tape at the portions, the sealing temperature tends to lower, however, since the heater wires are closely located, much tendency is cancelled out, further, through controlling the supply current, the above arrangement is operated sufficiently practical and it was found out that no air leakage gap was formed in the resultant seal line.

A heater wire which makes use of the above is one shown in Fig. 9, in which the width of the resistance material is narrowed and fine slits are cut in a heat generating portion 23 to form a uniform zigzag in perpendicular direction in the longitudinal direction thereof, and Figs. 10 through 12 are partially enlarged views thereof. When these heater wires are used and if the slits are sufficiently small, a beautiful single seal line 24 as illustrated can be obtained. Further, the zigzag is interrupted immediately before the electrode portions at the both ends and is restored to the original width, no problematic end swellings appear on the seal line 24, which is the third countermeasure.

The resistance value of the zigzag shaped heater wire was about 25Ω wherein fine slits of about 0.2mm are cut on the heat generating portion 23 with an interval of about 0.4mm in a zigzag manner, on the other hand, an electrical resistance of a heater wire having the width of 2mm and length of 200mm which forms the same seal line as above was 2Ω. Therefore, in the electrical point of view, the latter conventional heater wire requires of about 16V and 8A, on the other hand the former heater wire of the present invention forming the same seal line as the conventional one requires of a high voltage of 50V and a low current of 2A.

If the commercial source voltage is 100V, it is applicable only by subjecting the same to halfwave rectification, further if the length of the heater wire is prolonged to 1.4 times to 280mm, the commercial source voltage of 100V can be directly applied to the heater wire. Still further, if the commercial source voltage is 200V, when the length of the heater wire is prolonged to two times, the commercial source voltage is applicable to the heater wire after subjecting the same to halfwave rectification, however, when the width of the heater wire is modified to 3mm and the length thereof is prolonged in total to three times, the commercial source voltage of 200V can be applied as it is, thereby such as a transformer and a voltage regulating circuit can be completely omitted.

Since when the zigzag shaped heater wire is fixed while expanding a little, the expansion and contraction thereof due to heat can be absorbed by itself, the conventional complex expansion absorbing device having many parts as shown in Fig. 5 is, of course, unnecessitated as well as the simple device as shown in Fig. 4 is also completely unnecessitated.

The reason how the gaps disappear from the seal line even when the heater wire includes the gaps is that the heat generated is transferred toward the gaps via the covering fluoro resin coated glass tape and the polyethylene film itself to be sealed. Therefore, if the usual thickness of 0.1 - 0.2mm is further thickened or such as the generated thermal amount and the generating time are increased, the gaps on the seal line will disappear even if the gap is more than 0.2mm. Further, the gap of less than 0.1mm is, of course, preferable, however, the mass production using etching will become difficult. The appended claims cover these sizes of the gaps. Within the defined range, a gap having a taper as shown in Fig. 11 is acceptable.

Further, it is permitted to modify the width of the heater wire, since the heat generation amount is anti-proportional to the width, through combination with the gaps heaters having a variety of effects can be manufactured. For example, as shown in Fig. 12, although the heater has the same or the substantially the same configuration with regard to sealing, the temperature distribution thereof is varied in such a manner that at the center portion in the width of the heat generating portion is set high and the surrounding portion thereof is set lower, thereby a possible edge cutting can be prevented. In fact, since heat generating density is also anti-proportional to the interval of the gaps, with the measure the same effect as increasing the taper of the gaps in the heater wire as shown in Fig. 11 can be obtained.

With an annealed material such as iron chromium material and nichrome alloy, a heater wire having width of even 2mm is soft and deforms during treatment thereof, if the thickness thereof is not about 0.2mm. However, these days a thin plate having thickness of 0.1mm can be manufactured by an economical rolling and when the thin plate is strengthened through a proper degree of quenching, a heat generating portion having a zigzag in the interval of 0.4mm as referred to above shows a sufficiently practical strength. However, if the tempering is too strong, the zigzaged heat generating portion is likely to break, therefore, the quenching amount has to be proper.

Since the operating temperature of the heater wire is below 200°C and is far below the quenching temperature of more than 600°C, no tempering occurs due to the heating. Further, other than the tempering a strengthening processing such as reforming by means of such as rolling and forging can be applied. To sum up, with regard to thickness of the heater wire the thinner, the better so long as the strength thereof can be supplemented such as by tempering. The zigzag direction in the longitudinal direction as shown in the plan view in Fig. 13 can be used, however, since each zigzag length is longer, a further higher mechanical strength is required. Accordingly the strength thereof depends on properness of its configuration design. Further, in the case of the heater having a broad area as shown in Fig. 13, any manners of covering the area with the wires and gaps are permitted and the zigzag shapes as defined in claims cover all of these zigzag shapes. Further, other than the zigzag shape defined only by straight lines zigzag shapes defined by curved lines are also included. Further, other than the heat generating wire itself of straight line any shapes of heat generating wires such as curved one and one having different widths can be used.

Further, as processing methods thereof such as wire cutting and laser cutting can be used. Although a heater wire is not so expensive article, however, if a transformer can be omitted by modifying the processing of the heater wire, the heater wire can be manufactured in view of the saved cost of omitting the transformer. Accordingly, although the etching is a very economical method, the present invention is not limited thereto. Other than the zigzag shaped heat generating portion 23 formed integral with the electrode portion 4, as shown in the plan view in Fig. 14. the present invention includes an arrangement in which the zigzag portion as it is is connected via a width broadened connecting portion 25 to the electrode portion 4 through spot welding.

Further, the sealer pressing mechanism of the present invention includes a pressing operation via a worker wherein the worker grips a T shaped hand type handle being provided with a heater at one side thereof by the hand and performs heat sealing by pressing the same on polyethylene placed on a work stand. Further, since the present heater can be operated while omitting the voltage regulator therefor, in such instance, the power source circuit implies a simple current supply from the power source to the heater. Further, since the impulse sealer of the present invention is light weight and can be directly coupled to a power source, the present impulse sealer can be actively used in a field where only heating plate type heaters are conventionally used.

The above can also be applied to a book binding machine and a laminator using such heating plate type heater and the impulse heat sealer of the present type can be applied therefor. Namely, a fluoro resin tape is covered on a zigzag shaped heater wire which is shaped into a necessary configuration, with a press mechanism incorporating the same such as bundle of paper for book binding and laminated films are pressed, a comparatively large current is fed thereto for a short time to heat the same and is interrupted to cool the same, thereby an adhesive of such as heat meltable resin is melted and adhered. For example, since the zigzag shaped heater wire can be shaped in a rectangular shape, such heater wire is suitable for laminating a photo for an identification card. Such heater can be used any time when desired, moreover, such heater is not required to be heated always which contributes to energy saving. The heating equipment such as the impulse heat sealer as defined in the claims includes the above referred to book binding machine and laminator.

### Industrial Applicability of the Invention

According to the present invention, since the heater wires are formed by making use of such as photoetching, heater wires of any configurations can be manufactured accurately in large amount and with low cost, in addition, causes of shortening life time of the heater wire such as overheating due to poor spot welding is eliminated.

Since the electrode portions are formed thin as the heat generating portion, the electrode portions can be extended over on the heater stand, the undesirable formation of penetration holes on a processing subject due to overheating because of the floating in air of a part of the heat generating portion which likely happens at both ends of the conventional extension absorbing device is prevented.

Further, since the zigzag shape of the heater wire is formed with narrow slits which cause to disappear the slit gaps on the seal line, the voltage to be applied to the heat generating portion can be approximated to the voltage of the power source, thereby, a voltage regulator such as a transformer is unnecessitated and the structure thereof is simplified. Because the heavy transformer is omitted, the weight of the present device becomes very light and the cost thereof is lowered.

Further, since a possible distortion due to thermal expansion can be absorbed by the spring property of the heater wire itself and the zigzag shaped heat generating portion further enhances the distortion absorbing effect, thereby, the extension absorbing devices which usually have to be provided at the both ends of the heater wire can be simplified or unnecessitated.

Thus, the impulse heat sealer itself can be easily manufactured and the cost thereof can be lowered extremely.

Further, by making use of the heater wire of the present invention, an impulse heat sealer type book binding machine and laminator can be manufactured, and the present heater wire can be used instantly which contributes to energy saving.

## Claims

1. A heater wire for a heating device such as an impulse heat sealer which comprises at least a power source circuit, a heater connected thereto and a press mechanism incorporating the heater, wherein by feeding a comparatively large current from the power source circuit for a short time to the heater including a heater wire which is covered by such as fluoro resin coated glass tape to heat the same and by interrupting the same for cooling, such as polyethylene and a heat meltable resin caught in the press mechanism is melted and adhered, **characterized in that** the heater wire is formed in such a manner that a thin plate of electrically high resistance metal such as iron chromium which is thinned extremely by means of such as rolling and is properly strengthened such as by tempering is processed such as by photoetching in such a configuration that the width of electrode portion or a portion which is required to suppress heat generation is broadened so far as permitted, a heat generating portion is shaped into a desired configuration with a narrow uniform width, then the both portions are integrated so as to form a unified body.

2. A heat wire according to Claim 1, **characterized in that** in order to prevent swelling of a seal line or plane to a side of such as a main body of a polyethylene bag caught in the press mechanism and the breakage thereof should be prevented, the heater wire is shaped in such a manner that either the width broadened portion of the electrode portions at the side facing the main body is eliminated or when the broadened portions are provided at both sides of the electrode portions, the broadened portions facing the main body is retreated further away in comparison with another broadened portion at the opposite bag edge side.

3. A heater wire for a heating device such as an impulse heat sealer, **characterized in that** the impulse heat sealer is structured in such a manner that heat generating portions of a single or a plurality of heater wires are arranged to come close within small gaps of certain degree formed by itself or with the others to thereby gather the heat generated together through heat diffusion at a resultant seal line or plane causing the gaps to disappear.

4. A heater wire according to Claim 1, **characterized in that** the heater wire is shaped in a zigzag form with a small gap which is caused to disappear through heat diffusion on a resultant seal line or plane, and is spread over a desired configuration for the heat generating portion.

5. A heater wire for an image forming device wherein said heater wire is attached to an aluminum nitride thin plate and the like to perform even heating, the heater wire is formed in such a manner that a thin plate of electrically high resistance metal such as iron chromium which is thinned extremely by means of such as rolling and is properly strengthened such as by tempering is processed to form an electrode portion or a portion which is required to suppress heat generation having broadened width so far as permitted and a heat generating portion is formed into a zigzag shape with a narrow uniform width and with a small gap causing heating unevenness to disappear through heat diffusion at the side opposite to the side to which an aluminum nitride thin plate and the like is attached
